**Europäisches Patentamt**

**European Patent Office**

**Office européen des brevets**

(19)

(11) Veröffentlichungsnummer : **0 023 899**
**B1**

(12) **EUROPÄISCHE PATENTSCHRIFT**

(45) Veröffentlichungstag der Patentschrift :
**16.02.83**

(51) Int. Cl.³ : **C 02 F 11/14, C 02 F 9/00**

(21) Anmeldenummer : **80890089.8**

(22) Anmeldetag : **01.08.80**

(54) Vorrichtung zur Entwässerung von wässrigen Suspensionen und Schlämmen.

(30) Priorität : **02.08.79 AT 5324/79**
**02.08.79 AT 5325/79**

(43) Veröffentlichungstag der Anmeldung :
**11.02.81 Patentblatt 81/06**

(45) Bekanntmachung des Hinweises auf die Patenterteilung : **16.02.83 Patentblatt 83/07**

(84) Benannte Vertragsstaaten :
**BE CH DE FR GB IT LI LU NL SE**

(56) Entgegenhaltungen :
**AT B 328 989**
**DE A 2 438 165**
**DE A 2 515 162**
**FR A 2 317 012**
**FR A 2 351 061**
**FR A 2 407 174**
**US A 3 873 450**
**CARL HANSEN VERLAG, München-Wien 1976**
**HARTINGER « Taschenbuch der Abwasserbe-**
**handlung » Band I Chemie**

(73) Patentinhaber : **VOEST-ALPINE Aktiengesellschaft**
**Friedrichstrasse 4**
**A-1011 Wien (AT)**

(72) Erfinder : **Hanke, Reinhart, Dipl.-Ing.**
**Annaberggasse 2**
**A-8700 Leoben (AT)**
Erfinder : **Klinar, Gottfried**
**Alpenstrasse 33**
**A-8707 Leoben (AT)**
Erfinder : **Jahn, Kornel, Dipl.-Ing.**
**Seisgasse 14**
**A-1040 Wien (AT)**
Erfinder : **Strombach, Anton**
**Ameisbachzeile 119/2/11**
**A-1160 Wien (AT)**

(74) Vertreter : **Kretschmer, Adolf, Dipl.-Ing.**
**Schottengasse 3a**
**A-1014 Wien (AT)**

EP 0 023 899 B1

Anmerkung : Innerhalb von neun Monaten nach der Bekanntmachung des Hinweises auf die Erteilung des
europäischen Patents im Europäischen Patentblatt kann jedermann beim Europäischen Patentamt gegen das erteilte
europäische Patent Einspruch einlegen. Der Einspruch ist schriftlich einzureichen und zu begründen. Er gilt erst als
eingelegt, wenn die Einspruchsgebühr entrichtet worden ist (Art. 99(1) Europäisches Patentübereinkommen).

Vorrichtung zur Entwässerung von wässrigen Suspensionen und Schlämmen

Die Erfindung bezieht sich auf eine Vorrichtung zur Entwässerung von wässrigen Suspensionen und Schlämmen mit einer Trockenpresse, einem Spaltsieb und einer dem Spaltsieb vorgeschalteten und einer Mischvorrichtung nach geschalteten Reaktionszone.

Bei der Entwässerung von wässrigen Suspensionen, wie beispielsweise Abwässern, ist es bekannt, vor der Entwässerung Flockungshilfsmittel, wie beispielsweise Polyelektrolyte, der Suspension zuzusetzen, welche mit der Suspension vermischt werden. Es sollen dadurch die in der Suspension enthaltenen feinen Feststoffe zu Flocken vereinigt werden, welche leichter von der wässrigen Phase abgeschieden werden können. Bei den bekannten Anordnungen dieser Art wird das Flockungshilfsmittel einem Mischer zugesetzt, in welchem das Flockungshilfsmittel intensiv mit der Suspension vermischt wird, und die mit dem Flockungshilfsmittel versetzte Suspension wird unmittelbar aus dem Mischer der Aufgabestelle einer nachgeschalteten Entwässerungseinrichtung zugeführt. Die Zusammensetzung der Suspensionen ändert sich häufig von Zeit zu Zeit und die Geschwindigkeit der Flockenbildung ist daher verschieden. Im übrigen wird auch während der Mischung die Flockenbildung beeinträchtigt.

Mit den bekannten Einrichtungen dieser Art war somit eine ausreichende Flockenbildung nicht gewährleistet, was zur Folge hatte, daß die Entwässerung mangelhaft war.

Aus der FR-A 2 351 061 ist eine Einrichtung der eingangs genannten Art bekannt geworden, bei welcher eine Reaktionszone vor der Aufgabe auf die Trockenpresse vorgesehen war. Die bekannte Reaktionszone ermöglichte zwar eine gewisse Beruhigung der Mischung zum Zwecke einer verbesserten Flockenbildung, jedoch war eine gezielte Beeinflussung der Flockenbildung nicht möglich.

Reaktionszonen für die Ausbildung von Flocken können auch der FR-A 2 407 174 sowie der AT-B 328 189 entnommen werden.

Für die Entwässerung von wässrigen Suspensionen, wie beispielsweise Abwässern, ist die Verwendung von Siebbandpressen bekannt. Auf die Siebbandpresse soll der zu entwässernde Stoff nicht in zu flüssigem Zustand aufgegeben werden und es ist auch bekannt, dem Sieb einer Siebbandpresse eine von einem Taschenfilter gebildete Vorentwässerungsstufe vorzuschalten. Die Reinigung solcher Taschenfilter erfordert aber einen hohen Wasserverbrauch und der Entwässerungseffekt solcher Taschenfilter ist auch nicht zufriedenstellend. Es muß daher bei den bekannten Anordnungen der Großteil der Entwässerung auf der Siebbandpresse erfolgen, was eine aufwendige Bauart der Siebbandpresse zur Folge hat. In den meisten Fällen muß noch eine Hochdruckstufe nachgeschaltet werden, deren Konstruktion aufwendig ist.

Die Erfindung zielt nun darauf ab, eine Vorrichtung der eingangs genannten Art zu schaffen, mit welcher die Entwässerungsleistung wesentlich verbessert wird und bei welcher im Anschluß an die Siebbandpresse eine aufwendige Hochdruckstufe nicht mehr erforderlich ist. Vor allem zielt die Erfindung hiebei darauf ab, auf die Flockenbildung entsprechend den jeweiligen Erfordernissen Einfluß nehmen zu können. Zur Lösung dieser Aufgabe besteht die Erfindung im wesentlichen darin, daß die Reaktionszone von einem Reaktionsgefäß gebildet ist, welches Reaktionsgefäß einen zur Aufgabestelle des Spaltsiebes führenden Überlauf aufweist und in Richtung zum Überlauf kippbar gelagert ist, wobei die verschiedenen Kippstellungen feststellbar sind, daß die Kippachse des Reaktionsgefäßes der Aufgabestelle des Spaltsiebes unmittelbar benachbart angeordnet ist, daß das Spaltsieb schräggestellt ist und daß die an das Spaltsieb anschließende Trockenpresse in an sich bekannter Weise als Siebbandpresse ausgebildet ist. Mit einer derartigen Vorrichtung kann die Suspension, nachdem sie in einer Mischvorrichtung mit Flockungshilfsmitteln, wie beispielsweise Polyelektrolyten versetzt wurde, bevor sie auf das Spaltsieb aufgebracht wird, in der Reaktionszone während einer einstellbaren Zeitspanne in Ruhe belassen bzw. in einer kontrollierten Turbulenz gehalten werden, worauf die Flocken auf einem Spaltsieb von der flüssigen Phase getrennt und in einer Siebbandpresse weiter entwässert werden. Es wird somit die im Mischer intensiv mit dem Flockungshilfsmittel vermischte Suspension nicht unmittelbar der Aufgabestelle des Spaltsiebes zugeführt, sondern vielmehr einem Reaktionsgefäß zugeführt, welches auf Grund einer Konstruktion je nach Schwenklage ein unterschiedliches Fassungsvolumen aufweist. Das unterschiedliche Fassungsvolumen bestimmt hiebei bei vorgegebener Schlammenge in der Zeiteinheit die Zeitdauer des Verweilens in der Reaktionszone und es kann durch die Schwenkung des Reaktionsgefäßes die erforderliche Zeitspanne eingestellt bzw. eine kontrollierte Turbulenz erzielt werden. Durch die Trennung der Mischvorrichtung von der Aufgabestelle des Spaltsiebes unter Zwischenschaltung einer Reaktionszone wird eine mechanische Beanspruchung der Flocken, welche sich im Anschluß an die Mischvorrichtung ausbilden, über eine vorbestimmte Zeit vermieden, wodurch die Flockenbildung wesentlich begünstigt wird. Eine mechanische Beanspruchung, wie sie beispielsweise in der Mischvorrichtung selbst auftritt, und eine unmittelbare Aufgabe der Suspension in Anschluß an die Mischung auf das Spaltsieb würde die Flocken zerstören bzw. die Ausbildung großer Flocken verhindern. Durch die gesonderte Reaktionszone ist es in einfacher Weise möglich, die Verweilzeit der Suspension in dieser Reaktionszone den Umständen anzupassen, wobei zu berücksichtigen ist, daß je nach der Zusammensetzung der Suspension die optimale Flockenbildung mehr oder weniger Zeit benötigt. Die Erfindung geht hiebei von der Erkenntnis aus, daß bei zu kurzer Reaktionszeit die Flockenbildung nicht ihr optimales Ausmaß erreicht und daß bei zu langer Reaktionszeit wieder eine Degenerierung der Flocken erfolgt und die mechanische Belastbarkeit der Flocken verringert wird. Für die Entwässerung in der Siebbandpresse ist die Ausbildung großer Flocken vorteilhaft. Es ist aber auch die mechanische Belastbarkeit der Flocken von wesentlicher Bedeutung, da, wenn die optimale Flockengröße überschritten wird, die mechanisch nicht belastbaren Flocken wieder in der Siebbandpresse zerstört werden, was eine Verstopfung der Poren der Siebbänder zur Folge hat. Hiedurch wird die Wasserdurchlässigkeit der Filterbänder vermindert und der Entwässerungseffekt beeinträchtigt. Durch das Spaltsieb, welches ein Filter darstellt, wird nun die Flüssigkeit weitgehend abgetrennt und dadurch, daß die Verweilzeit sowie die Strömungsverhältnisse in der Reaktionszone eingestellt werden können, kann der nachfolgenden Siebbandpresse eine optimale Flockengröße für eine besonders wirkungsvolle Entwässerung zugeführt werden. Die Beschaffenheit der Flocken ist durch Entnahme von Proben ohne weiteres empirisch feststellbar. Dadurch, daß die Vorentwässerung der Suspension, nachdem die Flockenbildung in der Reaktionszone stattgefunden hat, auf einem Spaltsieb erfolgt, werden die Flocken von der flüssigen Phase ohne wesentliche Beanspruchung getrennt, so daß sie im optimalen Zustand zur Aufgabestelle der Siebbandpresse gelangen. Die mechanische Belastbarkeit der Flocken ist beim nachfolgenden Entwässerungsvorgang in Entwässerungsvorrichtungen von ausschlaggebender Bedeutung für die Güte der Entwässerung. Wenn beim Entwässerungsvorgang die die Flocken enthaltende Suspension über Siebe geführt wird, so werden bei einer verminderten mechanischen Belastbarkeit der Flocken die kleinen Teilchen mit dem Wasser abfließen. Bei Filterbändern verstopfen bei zu geringer mechanischer Belastbarkeit der Flocken die sedimentierenden Teilchen die Poren des Filterbandes und es wird dadurch die Wasserdurchlässigkeit des Filterbandes vermindert und der Entwässerungseffekt beeinträchtigt. Die Erfindung ermöglicht somit eine optimale Ausbildung der Flocken und damit einen optimalen Entwässerungseffekt. Es wird somit bereits der Aufgabestelle der Siebbanpresse ein weitgehend entwässertes Flockenmaterial zugeführt. Für ein solches bereits weitgehend entwässertes Flockenmaterial ist eine Siebbandpresse in besonderer Weise geeignet. Der Effekt der Siebbandpresse wird so weit verbessert, daß die Siebbandpresse weniger aufwendig ausgebildet sein kann und infolge der guten Flockenausbildung hat auch der die Siebbandpresse verlassende Filterkuchen einen weitaus geringeren Feuchtigkeitsgehalt, als bei dem bekannten Verfahren erzielt werden könnte und es wird sogar ermöglicht, bei gleichbleibendem oder sogar verringertem Feuchtigkeitsgehalt des Filterkuchens auf die Nachschaltung einer aufwendigen Hochdruckstufe der Siebbandpresse zu verzichten.

Gemäß der Erfindung ist die Anordnung vorzugsweise so getroffen, daß die Kante des Überlaufes von einem mit der Kippachse konzentrischen Kreiszylindersegment gebildet ist und daß an das Zylindersegment ein ortsfestes schräg abfallendes Verteilblech anschließt, welches die Aufgabestelle bildet. Dadurch wird in allen Kippstellungen des Reaktionsgefäßes ein glatter Übergang von der Kante des Überlaufes zur Aufgabestelle ermöglicht, so daß auch hier eine mechanische Beanspruchung der Flocken vermieden wird und überdies auch eine gute Dichtung zwischen dem Reaktionsgefäß und der Aufgabestelle erreicht wird. Die Ausbildung der Überlaufkante als Zylindersegment ermöglicht auch eine Ausbreitung der Suspension über eine breite Fläche und durch das Verteilblech wird eine gute Verteilung der Suspension über die gesamte Breite begünstigt. Die ist für die Funktion der nachfolgenden Entwässerungsvorrichtung von Vorteil. Zweckmäßig schließt gemäß dieser Erfindung an das Verteilblech ein an sich bekanntes schräges Entwässerungssieb an, wobei die Neigung des Verteilbleches geringer ist als die Neigung des Siebes. Diese geringere Neigung des Verteilbleches verbessert die gleichmäßige Verteilung auf das nachfolgende Sieb. Bei einer günstigen Ausführungsform der Erfindung mündet die Zuleitung in der Kippachse des Reaktionsgefäßes in dasselbe, wobei durch ein abwärts gerichtetes, vorzugsweise durch Parallelen zur Kippachse laufendes Leitblech die Einmündung der Zuleitung gegenüber dem Überlauf abgeschirmt ist, so daß die in das Reaktionsgefäß eintretende Suspension nicht unmittelbar zum Überlauf gelangen kann. Es wird durch dieses Leitblech eine Strömung durch das gesamte Reaktionsgefäß erreicht, so daß für alle Teile der Suspension die Verweilzeit im Reaktionsgefäß bei einer gegebenen Kippstellung desselben die gleiche ist. Hiebei ist gemäß der Erfindung zweckmäßig der untere Teil des Reaktionsgefäßes nach einem Zylindersegment ausgebildet, dessen Achse parallel zur Achse des die Überlaufkante bildenden Zylindersegmentes liegt. Dadurch wird die Strömung der zugeführten Suspension durch das gesamte Reaktionsgefäß begünstigt. Dadurch, daß die Zuleitung in das Reaktionsgefäß in der Kippachse desselben mündet, wird eine wesentliche konstruktive Vereinfachung erzielt, da die Zuleitung an ihrer Stelle verbleibt und lediglich die Anschlußstelle des Reaktionsgefäßes gegenüber der Zuleitung verdreht wird. Damit werden Dichtungsschwierigkeiten vermieden. Bei den erfindungsgemäß verwendeten Spaltsieben handelt es sich im Filtermittel, die bei der Filtration die Feststoffe zurückhalten, Flüssigkeiten aber passieren lassen. Derartige Spaltsiebe haben mit konventionellen Sieben nichts zu tun.

In der Zeichnung ist die Erfindung anhand eines Ausführungsbeispieles schematisch erläutert.

Figur 1 zeigt eine Seitenansicht der Anordnung, teilweise in Schnitt,

Figur 2 zeigt ein Detail,

Figur 3 zeigt einen Querschnitt durch das Reaktionsgefäß und durch die erste Stufe der Entwässerung nach Linie I-I der Fig. 4,

Figur 4 zeigt einen Schnitt durch das Reaktionsgefäß nach Linie IV-IV der Fig. 3.

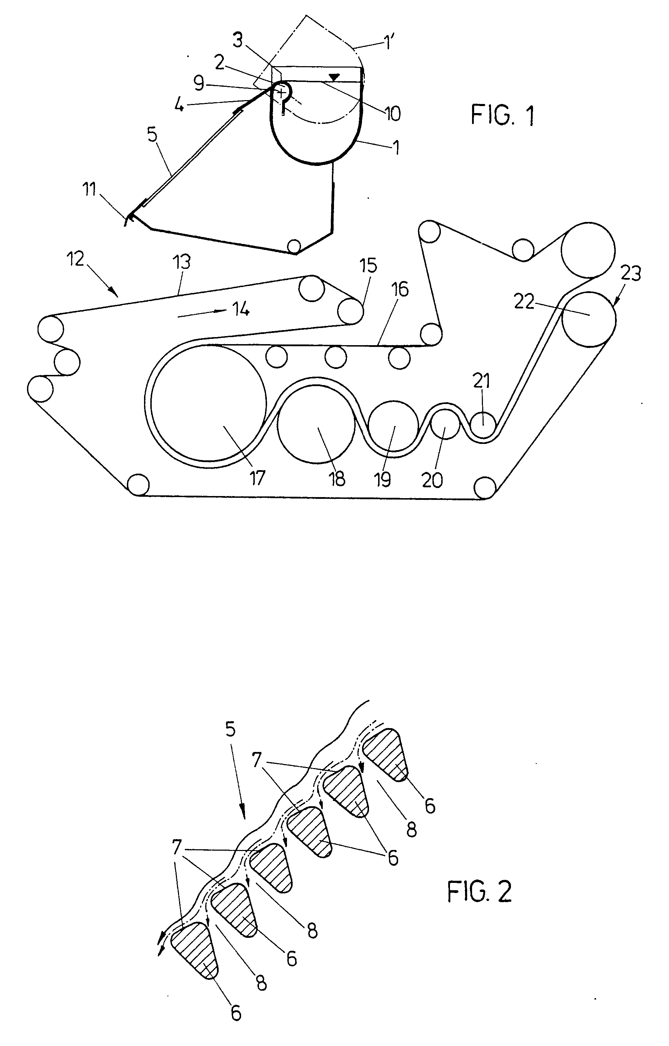

Die zu entwässernde Suspension wird in einem nicht dargestellten Mischer mit einem Flockungshilfsmittel innig vermischt und einem Reaktionsgefäß 1 über eine Leitung 2 zugeführt. Über eine Überlaufkante 3 gelangt die Suspension aus dem Reaktionsgefäß 1 auf eine Aufgabeplatte 4, an welcher ein schräggestelltes Spaltsieb 5 anschließt. Das Spaltsieb besteht, wie Fig. 2 im Detail zeigt, aus horizontalen Roststäben 6, deren Oberflächen 7 treppenartig abgestuft angeordnet sind. Die flüssige Phase fließt durch die Spalte 8 zwischen den Roststäben 6 ab und die die Flocken enthaltende Phase fließt über die schräge Oberfläche des Spaltsiebes 5 ab.

Das Aufnahmevolumen des Reaktionsgefäßes 1 ist durch Schwenken um die Achse 9 der Zuleitung 2 veränderbar. Der Flüssigkeitsspiegel in dem Reaktionsgefäß 1 ist mit 10 bezeichnet und es ist ersichtlich, daß in einer geschwenkten Lage, wie sie strich-punktiert mit 1' dargestellt ist, das Aufnahmevolumen des Reaktionsgefäßes verkleinert ist. Durch die Verkleinerung des Aufnahmevolumens des Reaktionsgefäßes wird die Verweilzeit in demselben und damit die Reaktionszeit verringert. Das Reaktionsgefäß ist in verschiedenen empirisch zu ermittelnden Schwenklagen feststellbar.

Von der unteren Kante 11 des schrägen Spaltsiebes 5 gelangt die flockige Phase auf die Aufgabestelle 12 einer Siebbandpresse. Das Siebband 13 wird in Richtung des Pfeiles 14 über Rollen geführt. An der Stelle 15 wird das flockige Material auf ein zweites Siebband 16 abgeworfen und wird nun zwischen den Siebbändern 13 und 16 in üblicher Weise über Entwässerungstrommeln 17, 18 und 19 sowie über Trommeln 20, 21, 22 geführt, wobei es an der Stelle 23 abgeworfen wird.

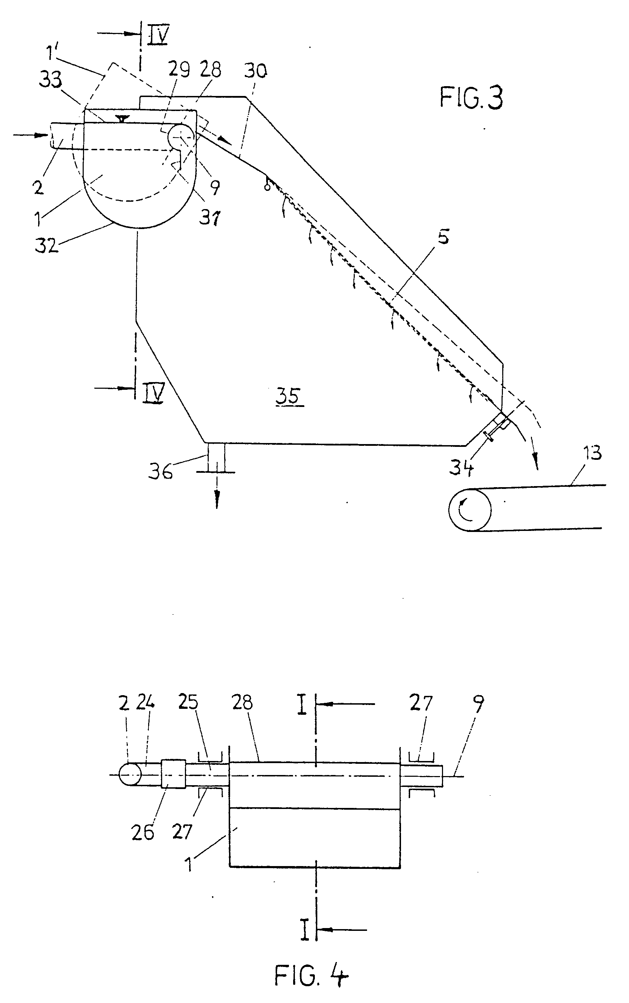

In Fig. 3 und 4 sind Details des der Siebbandpresse vorgeschalteten Spaltsiebes sowie der Reaktionszone zu entnehmen, wobei die Bezugszeichen der Fig. 1 im wesentlichen beibehalten wurden. Das Reaktionsgefäß 1 ist um die Achse 9 schwenkbar gelagert, wobei die im nicht dargestellten Mischer mit Flockungshilfsmitteln versetzte Suspension über eine Leitung 2 diesem Reaktionsgefäß 1 zugeführt wird. Die Leitung 2 mündet über einen abgewinkelten Teil 24 in den hohlen Achsstummel 25 des Reaktionsgefäßes 1, wie dies aus Fig. 4 ersichtlich ist. Da bei der Kippbewegung des Reaktionsgefäßes 1 der Achsstummel 25 gegenüber dem abgewinkelten Teil 24 der Zuleitung 2 verdreht wird, ist eine Dichtungsmanschette 26 vorgesehen. 27 sind die Kipplagerungen.

Die Überlaufkante 28 ist von einem Zylindersegment 29 gebildet, dessen Achse mit der Kippachse 9 zusammenfällt. An diesem Zylindersegment 29 liegt ein Verteilblech 30 an, welches die Aufgabestelle der Suspension auf das nachgeschaltete Spaltsieb 5 bildet. An das Zylindersegment 29 ist ein Leitblech 31 angeschlossen. Die durch den hohlen Achsstummel 25 einströmende Suspension gelangt in den Innenraum des Zylindersegmentes 29 und wird durch das Leitblech 31 nach unten abgelenkt, so daß sie nicht unmittelbar zum Überlauf 28 gelangen kann. Die zugeführte Suspension durchströmt somit das gesamte Reaktionsgefäß 1. Um diese Strömung zu begünstigen, ist der Boden des Reaktionsgefäßes 1 nach einem Zylindersegment 32 ausgebildet, dessen Achse parallel zur Achse des Zylindersegmentes 29 liegt.

In der mit vollen Linien gezeichneten Stellung, in welcher sich der Flüssigkeitsspiegel 33 einstellt, weist das Reaktionsgefäß 1 den größten Fassungsraum auf. Bei einer Verschwenkung in die strichliert dargestellte Lage 1' wird dieser Fassungsraum verringert und in jeder beliebigen Schwenkstellung kann das Reaktionsgefäß 1 festgelegt werden, so daß der Fassungsraum des Reaktionsgefäßes 1 und damit die Verweildauer der Suspension im Reaktionsgefäß 1 beliebig eingestellt werden kann.

An das Verteilblech 30 schließt das schräge Spaltsieb 5 an, dessen Schräglage durch eine Stellschraube 34 verändert werden kann. Dieses Spaltsieb 5 stellt die erste Entwässerungsstufe dar und das Wasser gelangt durch das Sieb in einen Raum 35, aus welchem es durch einen Auslaß 36 abfließt. Von dem Spaltsieb 5 gelangt der Schlamm auf das Siebband 13 der Siebbandpresse.

Wie die Zeichnung zeigt, ist die Neigung des Verteilbleches 30 geringer als die Neigung des Spaltsiebes 5, wodurch die Verteilwirkung verbessert wird.

## Ansprüche

1. Vorrichtung zur Entwässerung von wässrigen Suspensionen und Schlämmen mit einer Trockenpresse, einem Spaltsieb (5) und einer dem Spaltsieb (5) vorgeschalteten und einer Mischvorrichtung nachgeschatteten Reaktionszone, dadurch gekennzeichnet, daß die Reaktionszone von einem Reaktionsgefäß (1) gebildet ist, welches Reaktionsgefäß (1) einen zur Aufgabestelle (4) des Spaltsiebes (5) führenden Überlauf (28) aufweist und in Richtung zum Überlauf (28) kippbar gelagert ist, wobei die verschiedenen Kippstellungen feststellbar sind, daß die Kippachse (9) des Reaktionsgefäßes (1) der Aufgabestelle (4) des Spaltsiebes (5) unmittelbar benachbart angeordnet ist, daß das Spaltsieb schräggestellt ist und daß die an das Spaltsieb anschließende Trockenpresse in an sich bekannter Weise als Siebbandpresse ausgebildet ist.

2. Vorrichtung nach Anspruch 1, dadurch gekennzeichnet, daß die Kante des Überlaufes (28) von einem mit der Kippachse (9) konzentrischen Kreiszylindersegment (29) gebildet ist und daß an das Zylindersegment (29) ein ortsfestes schräg abfallendes Verteilblech (30) anschließt, welches die Aufgabestelle (4) bildet.

3. Vorrichtung nach Anspruch 1 oder 2, dadurch gekennzeichnet, daß an das Verteilblech (30) das schräggestellte Spaltsieb (5) anschließt und die Neigung des Verteilbleches (30) geringer ist als die Neigung des Spaltsiebes (5).

4. Vorrichtung nach einem der Ansprüche 1, 2 oder 3, dadurch gekennzeichnet, daß die Zuleitung (2) in der Kippachse (9) des Reaktionsgefäßes (1) in dasselbe mündet und durch ein abwärts gerichtetes, vorzugsweise durch Parallelen zur Kippachse (9) laufendes Leitblech (31) gegenüber dem Überlauf (28) abgeschirmt ist.

5. Vorrichtung nach einem der Ansprüche 1 bis 4, dadurch gekennzeichnet, daß der untere Teil des Reaktionsgefäßes (1) nach einem Zylindersegment (32) ausgebildet ist, dessen Achse parallel zur Achse (9) des die Überlaufkante (28) bildenden Zylindersegmentes (29) liegt.

## Claims

1. Device for dewatering aqueous suspensions and slurries, comprising a drying press, a bar screen (5) and a reaction zone arranged upstream of the bar screen (5) and downstream of a mixing means, characterized in that the reaction zone is formed by a reaction vessel (1), said reaction vessel (1) having a spillway (28) leading to the feeding location (4) of the bar screen (5) and being tiltable in the direction of the spillway (28), with different tilting positions being lockable, that the tilting axis (9) of the reaction vessel (1) is arranged immediately adjacent to the feeding location (4) of the bar screen (5), that the bar screen (5) is arranged in an inclined position and that the drying press is, as known per se, a traveling screen press.

2. Device as claimed in claim 1, characterized in that the edge of the spillway (28) is formed by a circular cylinder segment (29) concentric with the tilting axis (9) and that a stationary sloping distributing plate (30) lies contiguous with said cylinder segment (29) and forms the feeding location (4).

3. Device as claimed in claim 1 or 2, characterized in that the inclined bar screen (5) lies contiguous with the distributing plate (30) and that the inclination of the distributing plate (30) is less than the inclination of the bar screen (5).

4. Device as claimed in claim 1, 2 or 3, characterized in that the feeding line (2) leads into the reaction vessel (1) in the tilting axis (9) thereof and is shielded against the spillway (28) by a baffle plate (31) directed downwardly and preferably having generatrices parallel to the tilting axis (9).

5. Device as claimed in any one of claims 1 to 4, characterized in that the lower portion of the reaction vessel (1) is formed as a cylinder segment (32) whose axis is parallel to the axis (9) of the cylinder segment (29) forming the spillway edge (28).

## Revendications

1. Dispositif pour la déshydratation de suspensions et de boues aqueuses avec une presse de séchage, un tamis à fentes (5) et une zone de réaction placée en amont du tamis à fentes (5) et en aval d'un dispositif mélangeur, caractérisé en ce que la zone de réaction est constituée par un récipient de réaction (1), qui comporte un trop-plein (28) aboutissant à la zone de chargement (4) du tamis à fentes (5) et qui est monté de façon à pouvoir basculer en direction du trop-plein (28), les différentes positions de basculement pouvant être fixées, en ce que l'axe de basculement (9) du récipient de réaction (1) est placé immédiatement à côté de la zone de chargement (4) du tamis à fentes (5), en ce que le tamis à fentes est incliné et en ce que la presse de séchage placée à la suite du tamis à fentes est agencée d'une manière connue sous la forme d'une presse à bande de filtrage.

2. Dispositif selon la revendication 1, caractérisé en ce que le bord du trop-plein (28) est constitué par un segment de cylindre circulaire (29) concentrique à l'axe de basculement (9) et en ce qu'il est prévu à la suite du segment de cylindre (29) une tôle distributrice (30) placée dans une position fixe, inclinée vers le bas et qui constitue la zone de chargement (4).

3. Dispositif selon l'une des revendications 1 ou 2, caractérisé en ce que le tamis à fentes (5) incliné est disposé à la suite de la tôle distributrice (30) et en ce que l'inclinaison de la tôle distributrice (30) est plus faible que l'inclinaison du tamis à fentes (5).

4. Dispositif selon l'une des revendications 1, 2 ou 3, caractérisé en ce que le tuyau d'alimentation (2) débouche dans le récipient de réaction (1) suivant l'axe de basculement (9) de celui-ci et est protégé contre le trop-plein (28) par une tôle déflectrice (31) dirigée vers le bas, de préférence orientée parallèlement à l'axe de basculement (9).

5. Dispositif selon l'une des revendications 1 à 4, caractérisé en ce que la partie inférieure du récipient de réaction est agencée en forme de segment de cylindre (32) dont l'axe est orienté parallèlement à l'axe (9) du segment de cylindre (29) formant le bord de trop-plein (28).

FIG. 1

FIG. 2

FIG. 3

FIG. 4